# EUROPÄISCHE PATENTSCHRIFT

(11) **EP 0 760 312 B1**
(45) Veröffentlichungstag und Bekanntmachung des Hinweises auf die Patenterteilung: **10.10.2001**
(21) Anmeldenummer: 96105926.8
(22) Anmeldetag: 16.04.1996
(51) Int. Cl.: B60R 16/02

(54) **Schaltungsanordnung zur Stromversorgung von Verbrauchern**
Circuit for the power supply of consumers
Circuit pour l'alimentation des consommateurs

(30) Priorität: 01.09.1995 DE 19532297
(43) Veröffentlichungstag der Anmeldung: 05.03.1997
(73) Patentinhaber: ROBERT BOSCH GMBH, 70442 Stuttgart (DE)
(72) Erfinder: Meyer, Friedhelm, Dipl.-Ing., 75428 Illingen (DE)

(56) Entgegenhaltungen:
- EP-A- 0 402 642
- DE-A- 2 810 201
- DE-A- 3 822 006
- DE-C- 3 801 478

## Beschreibung

Die Erfindung geht aus von einer Schaltungsanordnung zur Stromversorgung von ersten Verbrauchern und einer Batterie sowie von zweiten Verbrauchern nach der Gattung des Hauptanspruchs. Sie betrifft insbesondere die Stromversorgung in einem Kraftfahrzeug, bei der die ersten Verbraucher sowie die Batterie vom Generator, dessen Ausgangsspannung mittels eines Spannungsreglers geregelt wird, mit der üblichen Bordnetzspannung versorgt werden. Zur Versorgung der zweiten Verbraucher wird der Generator auf eine höhere Ausgangsspannung geregelt. Die zweiten Verbraucher sind beispielsweise Heizwiderstände, die zeitweilig mit einer gegenüber der Bordnetzspannung deutlich erhöhten Spannung versorgt werden.

### Stand der Technik

In einem Kraftfahrzeug sind verschiedene elektrische Verbraucher vorhanden, deren Stromversorgung nur dann optimal erfolgen kann, wenn eine erste Gruppe von Verbrauchern mit der üblichen Bordnetzspannung versorgt wird und wenn eine zweite Gruppe von Verbrauchern an eine gegenüber der Bordnetzspannung deutlich erhöhte Spannung legbar ist. Eine solche Schaltungsanordnung, bei der ein von der Brennkraftmaschine angetriebener Generator unter bestimmten Bedingungen eine erste Spannung erzeugt und unter wählbar anderen Bedingungen eine zweite höhere Spannung ist beispielsweise aus der DE-OS 38 22 006 bekannt. Bei dieser bekannten Schaltungsanordnung umfassen sowohl die ersten Verbraucher sowie die zweiten Verbraucher Heizwiderstände, wobei der Heizwiderstand der ersten Verbrauchergruppe mit der Bordnetzspannung, die etwa der Spannungsdifferenz zwischen der ersten vom Generator erzeugten Spannung und Massepotential entspricht, betrieben werden soll, während der Heizwiderstand der zweiten Verbrauchergruppe mit einer Spannungsdifferenz betrieben werden soll. Dazu ist der Heizwiderstand, der mit der Spannungsdifferenz betrieben werden soll, mit einer Seite direkt an den Ausgang des Generators angeschlossen und mit der anderen Seite an eine Klemme, an der die übliche Bordnetzspannung liegt. Die Spannungdifferenz ist kleiner oder größer als die Bordnetzspannung, sie ergibt sich aus der Potentialdifferenz zwischen der zweiten, höheren Spannung, die vom Generator geliefert wird und dem Bordnetzpotential. An diese Klemme sind die Batterie sowie die anderen Verbraucher angeschlossen.

Während des Normalbetriebes wird der Generator mit Hilfe des Feldreglers, der den Erregerstrom beeinflußt, so geregelt, daß die Ausgangsspannung des Generators der Bordnetzspannung entspricht bzw. etwas höher ist. Der Heizwiderstand, der mit der Spannungdifferenz versorgt werden soll, wird dann mit Hilfe eines von einem Heizregler ansteuerbaren Transistors überbrückt, so daß die vom Generator gelieferte Spannung direkt den ersten Verbrauchern zugeführt wird. Unter vorgebbaren Bedingungen, bei der bekannten Schaltung beispielsweise unter der Bedingung, daß ein Temperaturfühler eine tiefe Temperatur registriert, soll die Heizung erfolgen, der Feldregler regelt dann die Ausgangsspannung des Generators auf einen vorgebbar höheren Wert. Diese höhere Spannung wird dem zweiten Heizwiderstand zugeführt, die Überbrückung des zweiten Heizwiderstandes wird dann vom Heizregler unterbrochen, so daß die höhere Spannung nur noch am zweiten Heizwiderstand liegt. Durch diesen zweiten Heizwiderstand fließt somit ein Heizstrom, der im Heizwiderstand einen Spannungsabfall verursacht. Auf der dem Generator abgewandten Seite des Heizwiderstandes liegt dann eine Spannung, die der Generatorausgangsspannung vermindert um den Spannungsabfall im zweiten Heizwiderstand entspricht. Mit dieser Spannung ist eine Ladung der Batterie möglich.

Die aus der DE-OS 38 22 006 bekannte Schaltungsanordnung hat den Nachteil, daß die Generatorausgangsspannung direkt an den Erregerdioden liegt. Dies kann bei einer Ausgangsspannung, die gegenüber der Bordnetzspannung deutlich erhöht ist, dazu führen, daß die Dioden thermisch überbelastet sind, um dies zu vermeiden müßten Dioden eingesetzt werden, die auch noch bei Spannungen von mehr als 40 Volt und Erregerströmen über 10 A betreibbar sind. Ein weiterer Nachteil der bekannten Spannungsanordnung besteht darin, daß bei der höheren Generatorausgangsspannung auch die Erreger- bzw. Feldwicklung an der höheren Ausgangsspannung liegt und somit die Gefahr besteht, daß diese Erregerwicklung durchbrennt.

### Vorteile der Erfindung

Die Erfindungsgemäße Schaltungsanordnung zur Stromversorgung von verschiedenen Verbrauchern mit den Merkmalen des Anspruchs 1 hat dem gegenüber den Vorteil, daß überhaupt keine Erregerdioden mehr benötigt werden. Weiterhin ist vorteilhaft, daß die Erregerwicklung nicht mit der höheren Spannung beaufschlagbar ist, sondern stets an der üblichen Bordnetzspannung liegt. Erzielt werden die Vorteile, indem die Versorgung der Erregerwicklung mittels der Bordnetzspannung erfolgt. Ein Anschluß der Erregerwicklung an die Batterie stellt sicher, daß die zur Verfügung stehende Spannungshöhe stets einigermaßen konstant ist und ein Durchbrennen der Erregerwicklung nicht zu befürchten ist.

### Zeichnung

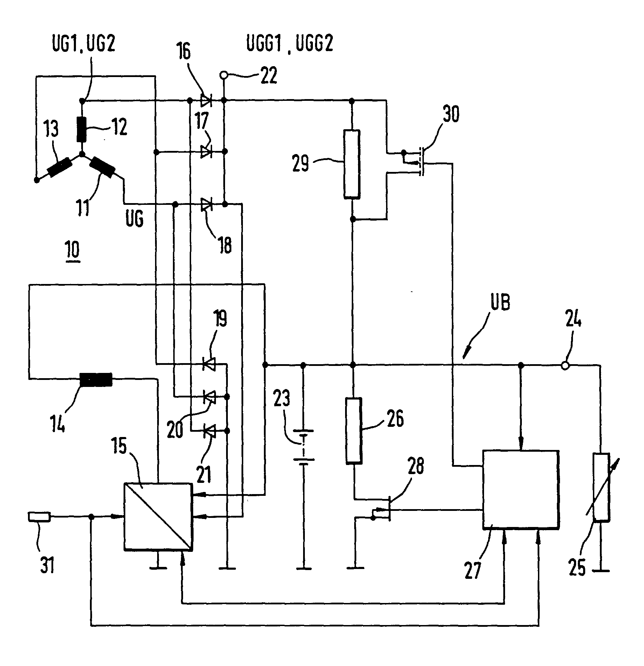

Ein Ausführungsbeispiel der Erfindung ist in der einzigen Figur der Zeichnung dargestellt und wird in der nachfolgenden Beschreibung näher erläutert.

### Beschreibung des Ausführungsbeispieles

Bei er in der Figur dargestellten erfindungsgemäßen Schaltungsanordnung zur Stromversorgung ist der Wechselstromgenerator, der die Versorgungsspannung erzeugen soll, mit 10 bezeichnet. Er umfaßt die Statorspulen 11, 12, 13 sowie die Feldspule 14 durch die der Feldstrom fließt, der vom Spannungsregler 15 geregelt wird.

Die Statorspulen 11, 12, 13 sind in einer Sternschaltung verschaltet, auf der dem Sternpunkt abgewiesenen Seite der Spulen entsteht die Ausgangsspannung des Generators UG1 bzw. UG2.

Die Ausgangsspannung UG1 bzw. UG2 des Generators 10 wird üblicherweise mit Hilfe einer Gleichrichterbrücke mit den Dioden 16, 17, 18, 19, 20, 21 gleichgerichtet. Die Dioden 16, 17, 18 werden üblicherweise als Plusdioden und die Dioden 19, 20, 21 als Minusdioden bezeichnet. Die Minusdioden stehen mit Masse in Verbindung, während die Kathode der Plusdioden auf eine Klemme 22 führt, an der die gleichgerichtete Ausgangsspannung des Generators UGG1 bzw. UGG2 abgreifbar ist.

Der Spannungsregler 15, der den Erregerstrom des Generators durch die Feldwicklung 14 regelt ist in üblicher Weise mit beiden Enden der Feldwicklung verbunden, dabei ist eine Seite der Feldwicklung an den Plusanschluß einer Batterie 23 angeschlossen, dieser Plusanschluß der Batterie führt auch zu einer Klemme 24, an der die ersten Verbraucher der Fahrzeugbordnetzes angeschlossen sind und an der die übliche Bordnetzspannung UB liegt. Das Bordnetz selbst, das ebenfalls zu den ersten Verbrauchern gehört, wird durch den Widerstand 25 symbolisiert. Weitere erste Verbraucher sind eine Heizwiderstand 26 und ein Heizregler 27 sowie ein Transistor 28, der vom Heizregler 27 ansteuerbar ist und den Heizwiderstand 26 mit Masse verbinden kann.

Zwischen dem Ausgang der Plusdioden bzw. an die Klemme 22 ist ein Verbraucher 29 angeschlossen. Die andere Seite dieses Verbrauchers 29 liegt an Klemme 24 und somit auf Bordnetzspannung. Der Verbraucher 29, z. B. ein Heizwiderstand, kann mit Hilfe eines parallel geschalteten Transistors 30, der vom Heizregler 27 angesteuert wird, überbrückt werden. Der Heizregler 27 sowie der Spannungsregler 15 sind einerseits miteinander verbunden, andererseits werden dem Spannungsregler 15 sowie dem Heizregler 27 Informationen zugeführt, die einen Heizwunsch erkennen lassen. Beispielsweise kann ein Temperatursensor 31, der die Kühlwassertemperatur mißt, dem Spannungsregler 15 und dem Heizregler 27 die Information zuführen, daß die Kühlmitteltemperatur niedrig ist und daß eine Heizung erforderlich ist.

Anstelle eines Temperaturfühlers 31 kann auch eine sonstige Einrichtung vorgesehen sein, bei deren Betätigung vom Spannungsregler 15 und vom Heizregler 27 erkannt wird, daß ein Heizwunsch vorliegt.

Die dargestellte Schaltungsanordnung arbeitet üblicherweise in der Art, daß der Spannungsregler 15 den Generator 10 so regelt, daß die gleichgerichtete Generatorausgangsspannung UGG1 etwa 14 Volt beträgt, mit einer solchen Generatorausgangsspannung läßt sich die Batterie 23 zuverlässig laden. In dem erwähnten Betriebszustand soll der Heizwiderstand 29 nicht betätigt werden, der Transistor 30 wird daher vom Heizregler 27 so angesteuert, daß der Heizwiderstand 29 überbrückt wird und die gleichgerichtete Generatorausgangsspannung UGG als Bordnetzspannung UB zur Verfügung steht.

In diesem Betriebszustand kann der Heizwiderstand 26 vom Heizregler 27 durch Ansteuerung des Transistors 28 mit Masse verbunden werden, es fließt dann ein Strom durch den Heizwiderstand 26 und erwärmt diesen. Soll dagegen auch der Heizwidersstand 26 nicht betrieben werden, steuert der Heizregler 27 den Transistor 28 so an, daß die Kollektor-Emitter-Strecke sperrt und somit die Verbindung zwischen dem Heizwiderstand 26 und Masse unterbricht, es fließt dann kein Strom durch den Widerstand 26.

Wird dagegen vom Spannungsregler 15 bzw. vom Heizregler 27 aus der vom Temperaturregler 31 gelieferte Information erkannt, daß der Heizwiderstand 29 in Betrieb genommen werden soll, regelt der Spannungsregler 15 den Strom durch die Feldwicklung 14 so, daß die Ausgangsspannung UG2 an den Statorwicklungen 11, 12, 13 des Generators auf einen wesentlich höheren Wert ansteigt, beispielsweise auf bis zu 40 Volt. Um eine solche Spannungserhöhung zu erzielen, wird der effektive Feldstrom durch die Feldwicklung 14 erhöht, indem das Tastverhältnis des Spannungsreglers 15 so verändert wird, daß die Zeit, in der der Transistor des Spannungsreglers 15 leitet gegenüber der Zeit in der er sperrt wesentlich erhöht wird. Eine solche Veränderung des Feldstromes ist erforderlich, da die Höhe der Spannung die der Feldwicklung zugeführt wird, nicht verändert werden kann, da die Feldwicklung wie bereits erwähnt an den Anschluß 24 bzw. den Plusanschluß der Batterie 23 angeschlossen ist.

Gleichzeitig mit der Erhöhung der Ausgangsspannung des Generators betätigt der Heizregler 27 den Transistor 30 und unterbricht die Überbrückung des Heizwiderstandes, so daß ein Strom durch den Heizwiderstand 29 fließt und diesen erwärmt. Eine richtige Dimensionierung des Heizwiderstandes 29 stellt sicher, daß bei der erhöhten Generatorausgangspannung von beispielsweise 40 Volt an dem generatorfernen Anschluß des Heizwiderstandes 29 eine Spannung von etwa 14 Volt entsteht, die sicherstellt, daß die Batterie 23 in optimaler Weise geladen wird. Bei einer solchen Dimensionierung ist also die Ladespannung für die Batterie 23 unabhängig davon, ob der Heizwiderstand 29 zugeschaltet ist oder nicht, stets gleich hoch. Bei eingeschaltetem Heizwiderstand 29 kann auch der Heizwiderstand 26 betrieben werden, dazu wird der Transistor 28 vom Heizregler 27 wiederum so angesteuert, daß ein Strom durch den Widerstand 26 fließt. Ist dagegen vorgesehen, daß nur der Heizwiderstand 29 betrieben werden soll, kann der Heizregler 27 eine entsprechende Ansteuerung des Transistors 28 auslösen und somit den Stromfluß durch den Heizwiderstand 26 unterbrechen.

Ist die zweite Generatorausgangsspannung UGG2 gegenüber der ersten UGG1 nicht so stark erhöht und beträgt z. B. 20 Volt, ist die Spannungsdifferenz, die am Heizwiderstand 29 abfallen kann, kleiner als UB und beträgt 20 V - 14 V = 6 V. UGG2 ist den zu erwartenden Erfordernissen anzupassen.

## Patentansprüche

1. Schaltungsanordnung zur Stromversorgung für erste Verbraucher (25, 26, 27, 28) und eine Batterie (23) sowie zweite Verbraucher (29) mit einem Wechselstromgenerator (10) mit nachgeschalteten Gleichrichtern (16 - 21) und einer Feldspule (14), deren erster Anschluß mit einem Spannungsregler (15) der die Ausgangsspannung (UGG) des Wechselstromgenerators (10) durch Regelung des durch die Feldspule (14) fließenden Stromes auf wenigstens 2 wählbare Spannungshöhen (UG1, UG2) regelt, in Verbindung steht, wobei die zweiten Verbraucher (29) direkt an die dem Wechselstromgenerator (10) nachgeschalteten Gleichrichter (16 - 21) angeschlossen sind und über Schaltmittel (30) überbrückbar sind, **dadurch gekennzeichnet, daß** der andere Anschluß der Feld- bzw. Erregerspule (14) mit den ersten Verbrauchern (25) und der Batterie (23) in Verbindung steht.

2. Schaltungsanordnung nach Anspruch 1, **dadurch gekennzeichnet, daß** ein Heizregler (27) vorhanden ist, der aus zugeführten Informationen erkennt, ob eine Heizwunsch vorliegt, und bei Vorliegen eines Heizwunsches die Schaltmittel (30) offnet und den Spannungsregler (15) veranlaßt den Feldstrom durch die Feldwicklung (14) so zu erhöhen, daß die Ausgangsspannung (UGG) des Generators (10) deutlich erhöht wird.

3. Schaltungsanordnung nach Anspruch 1 oder 2, **dadurch gekennzeichnet, daß** paralell zur Batterie (23) ein weiterer Heizwiderstand (26) angeordnet ist, der über Schaltmittel (28) mit Masse verbinddbar ist, wobei die Ansteuerung der Schaltmittel (28) der Heizregler (27) so erfolgt, daß die Schaltmittel (28) in leitenden Zustand geschaltet werden, wenn der Heizwiderstand (26) betrieben werden soll.

4. Schaltungsanordnung nach einem der vorhergehenden Ansprüche, **dadurch gekennzeichnet, daß** die zweiten Verbraucher wenigstens einen Heizwiderstand (29) umfassen.

5. Schaltungsanordnung nach Anspruch 4, **dadurch gekennzeichnet, daß** der Heizwiderstand (26) und der Heizwiderstand (29) unabhängig voneinander durch je eine Ansteuerung vom Heizregler (27) einschaltbar sind.

6. Schaltungsanordnung nach einem der vorhergehenden Ansprüche, **dadurch gekennzeichnet, daß** ein Temperatursensor (31) vorhanden ist, der insbesonders die Kühlmitteltemperatur einer Brennkraftmaschine ermittelt, da diese Temperatur dem Spannungsregler (15) und dem Heizregler (27) zugeführt wird und daß bei Unterschreiten einer Grenztemperatur das Vorliegen eines Heizwunsches erkannt wird und der Heizregler (27) entsprechende Ansteuersignale an die Schaltmittel (30) und/oder (28) abgibt und der Spannungsregler (15) das Tastverhältnis des Feldstromes erhöht.

## Claims

1. Circuit arrangement for supplying power to first loads (25, 26, 27, 28) and to a battery (23), and to second loads (29), having an AC generator (10) with downstream rectifiers (16-21) and having a field coil (14) whose first connection is connected to a voltage regulator (15) which regulates the output voltage (UGG) of the AC generator (10) by regulating the current flowing through the field coil (14) at at least two selectable voltage levels (UG1, UG2), in which case the second loads (29) are connected directly to the rectifiers (16-21) downstream of the AC generator (10) and can be bridged via switching means (30),
**characterized in that** the other connection of the field or excitation coil (14) is connected to the first loads (25) and to the battery (23).

2. Circuit arrangement according to Claim 1, **characterized in that** a heating regulator (27) is provided which uses supplied information to identify whether a heating demand is present and, in the presence of a heating demand, opens the switching means (30) and causes the voltage regulator (15) to increase the field current through the field winding (14) such that the output voltage (UGG) of the generator (10) is increased considerably.

3. Circuit arrangement according to Claim 1 or 2, **characterized in that** a further heating resistor (26) is arranged in parallel with the battery (23) and can be connected to earth via switching means (28), in which case the switching means (28) of the heating regulators (27) are actuated such that the switching means (28) are switched on when the heating resistor (26) is intended to be operated.

4. Circuit arrangement according to one of the preceding claims, **characterized in that** the second loads comprise at least one heating resistor (29).

5. Circuit arrangement according to Claim 4, **characterized in that** the heating resistor (26) and the heating resistor (29) can be switched on independently of one another by respective actuation of the heating regulator (27).

6. Circuit arrangement according to one of the preceding claims, **characterized in that** a temperature sensor (31) is provided, which determines in particular the coolant temperature of an internal combustion engine by this temperature being supplied to the voltage regulator (15) and to the heating regulator (27), and **in that**, if the temperature falls below a limit temperature, the presence of a heating demand is identified, and the heating regulator (27) emits appropriate actuation signals to the switching means (30) and/or (28), and the voltage regulator (15) increases the duty ratio of the field current.

## Revendications

1. Circuit pour alimenter en courant des premiers consommateurs (25, 26, 27, 28) et une batterie (23) ainsi que des seconds consommateurs (29), dans lequel
• un générateur de courant alternatif (10) est relié à des redresseurs (16-21) montés en aval et à une bobine de champ (14) dont le premier raccord aboutit à un régulateur de tension (15) qui règle la tension de sortie (UGG) du générateur (10) par réglage du courant traversant la bobine (14) à au moins 2 valeurs de tension sélectionnables (UG1, UG2),
• les seconds consommateurs (29) sont raccordés directement aux redresseurs (16-21) montés en aval du générateur (10) et peuvent être pontés par des moyens de commutation (30),
**caractérisé en ce que**
l'autre raccord de la bobine de champ ou d'excitation (14) est relié aux premiers consommateurs (25) et à la batterie (23).

2. Circuit selon la revendication 1,
**caractérisé en ce qu'**
il comporte un régulateur de chauffage (27) qui, à partir d'informations qu'il reçoit reconnaît s'il existe une demande de chauffage et dans ce cas ouvre les moyens de commutation (30) et déclenche le régulateur de tension (15) afin de faire monter le courant de champ traversant l'enroulement de champ (14) de manière à augmenter nettement la tension de sortie (UGG) du générateur (10).

3. Circuit selon la revendication 1 ou 2,
**caractérisé en ce qu'**
en parallèle avec la batterie (23) est montée une autre résistance chauffante (26) qui peut être reliée à la masse par des moyens de commutation (28) que commande le régulateur de chauffage (27) de manière que ces moyens (28) sont amenés dans leur état conducteur quand la résistance chauffage (26) doit être mise en service.

4. Circuit selon l'une quelconque des revendications précédentes,
**caractérisé en ce que**
les seconds consommateurs comprennent au moins une résistance chauffante (29).

5. Circuit selon la revendication 4,
**caractérisé en ce que**
les résistances chauffantes (26) et (29) peuvent être commutées indépendamment l'une de l'autre, chacune par une commande effectuée par le régulateur de chauffage (27).

6. Circuit selon l'une quelconque des revendications précédentes,
**caractérisé en ce qu'**
il comporte un détecteur de température (31) qui donne en particulier la température du liquide de refroidissement d'un moteur à combustion interne, cette température est transmise au régulateur de tension (15) et au régulateur de chauffage (27) et, si elle descend en dessous d'une certaine limite, une demande de chauffage est reconnue et le régulateur de température (27) envoie des signaux de commande correspondants aux moyens de commutation (30) et/ou (28) et le régulateur de tension (15) augmente le taux d'impulsions du courant de champ.
